(19) **Europäisches Patentamt / European Patent Office / Office européen des brevets**

(11) **EP 2 931 435 B1**

(12) **EUROPEAN PATENT SPECIFICATION**

(45) Date of publication and mention
of the grant of the patent:
**22.07.2020 Bulletin 2020/30**

(21) Application number: **13863654.3**

(22) Date of filing: **12.12.2013**

(51) Int Cl.:
**B05B 1/08** *(2006.01)*     **F15C 1/22** *(2006.01)*
**B60S 1/52** *(2006.01)*

(86) International application number:
**PCT/US2013/074603**

(87) International publication number:
**WO 2014/093590 (19.06.2014 Gazette 2014/25)**

(54) **FLUIDIC NOZZLE AND OSCILLATOR CIRCUIT**

FLUIDGEREGELTE DÜSE UND OSZILLATORSCHALTUNG

CIRCUIT DE BUSE ET D'OSCILLATEUR FLUIDIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.12.2012 US 201261736306 P**

(43) Date of publication of application:
**21.10.2015 Bulletin 2015/43**

(73) Proprietors:
• **dlhBowles Inc.**
  **Canton, OH 44706 (US)**
• **Gopalan, Shridhar**
  **Westminster, MD 21157 (US)**
• **Hartranft, Evan**
  **Baltimore, MD 21202 (US)**

(72) Inventors:
• **GOPALAN, Shridhar**
  **Westminster, Maryland (MD), 21157 (US)**
• **HARTRANFT, Evan**
  **Bowie, Maryland (MD), 20715 (US)**

(74) Representative: **Stiel, Jürgen**
  **Patentanwalt Stiel**
  **Geissleite 32**
  **97289 Thüngen (DE)**

(56) References cited:
  **WO-A1-2005/021341     FR-A1- 2 915 251**
  **JP-A- 2002 067 887     US-A1- 2010 276 521**
  **US-A1- 2010 276 521     US-B1- 6 253 782**
  **US-B2- 7 267 290     US-E- R E27 938**

EP 2 931 435 B1

**Description**

## BACKGROUND OF THE INVENTION

### Priority Claim and References to Related Applications:

This application claims priority to related and commonly owned U.S. provisional patent application no. 61/736,306, filed December 12th, 2012 and entitled Fluidic Nozzle and Oscillator Circuit. This application is also related to commonly owned U.S. patent application nos. 12/314242 and 12/467270 as well as commonly owned with related U.S. patents 4463904, 7014131, 7267290 and 7651036.

### Field of the Invention:

The present invention relates to fluidic circuits and nozzle assemblies configured with fluidic circuit oscillators, and more particularly to fluidic nozzle and circuit assemblies configured to generate a spray for automotive, industrial and consumer applications.

### Discussion of the Prior Art:

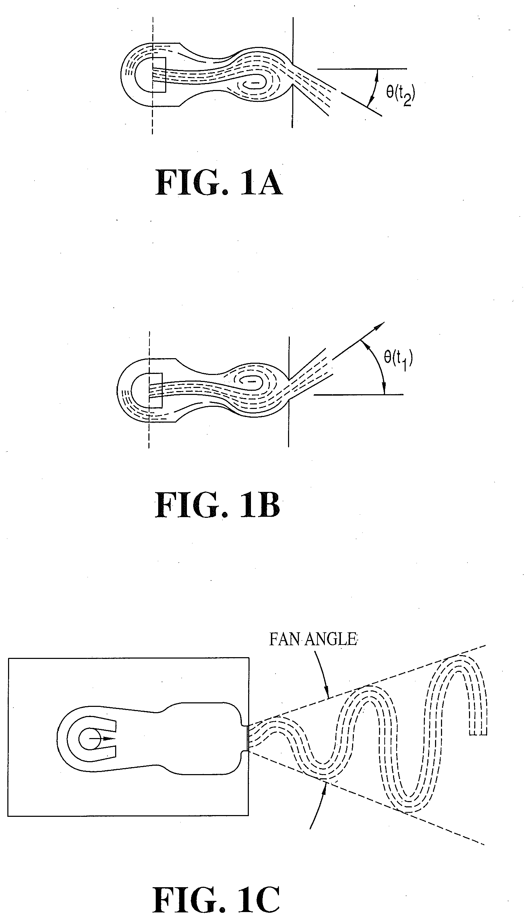

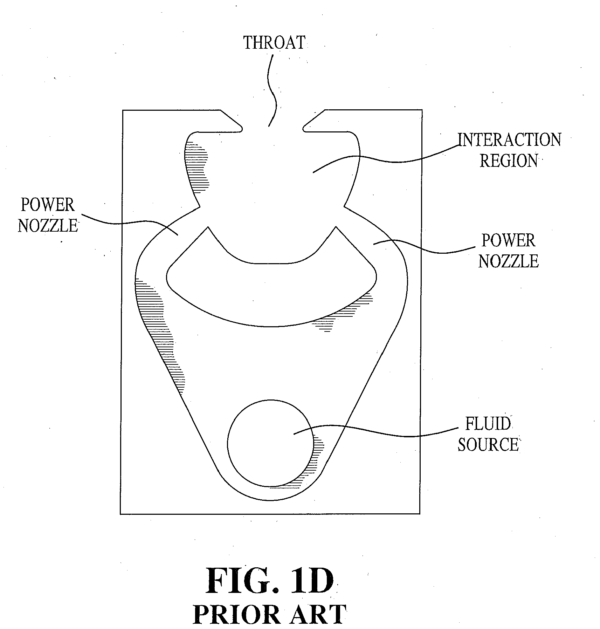

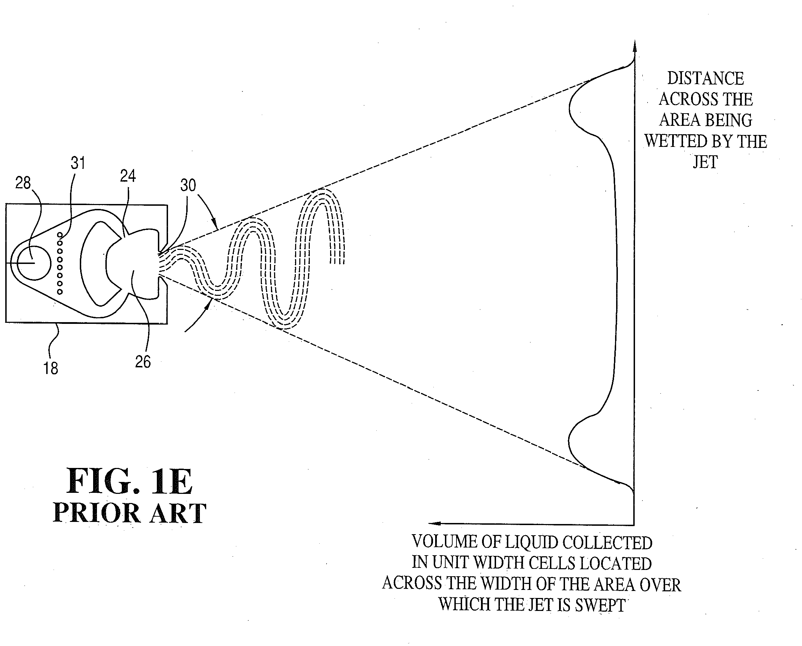

A fluidic nozzle creates a stream of fluid that oscillates within an included angle, known as the fan angle, as illustrated in Figs 1A-1C. The distribution of the fluid within this fan will vary depending on the type of fluidic circuit used. For example, in the mushroom circuit disclosed in applicant's US patent 7267290, the oscillating stream will tend to dwell briefly at the extremes of its travel, creating a fluid distribution or spray pattern that is called a heavy-ended fan as illustrated in Fig. 1E. Some circuits may include a splitter, which can increase the maximum fan angle and spray velocity. In this case, the oscillating stream will tend to dwell on the splitter, causing a fluid distribution or spray pattern that is called a center-heavy fan.

The fluid distribution can be important in several applications for fluidic nozzles. In an irrigation nozzle, for example, it is desirable to distribute water evenly over a given area or shape (for example, a quarter circle.) If a heavy-ended fluidic were to be used in such a case, more fluid would be deposited on the edges of the spray, and less in the center. Furthermore, since the trajectory of the droplets is related to droplet size and velocity, the irrigation nozzle will tend to throw water further on the ends than in the middle. Many irrigation nozzle assemblies have spray patterns with several heavy bands.

Another common application for fluidic nozzles is to distribute windshield cleaning fluid across a windshield. In this case, parts of the windshield may be covered with large amounts of wiper fluid, while other parts get only a light coating. In many cleaning applications, it is desirable to distribute fluid as evenly as possible over specific areas.

For contemporary automotive applications (e.g., as discussed generally in applicant's commonly owned US patents 7014131, 7267290 and 7651036) windshield washer nozzles are needed with improved dynamic performance, which means automotive windshield washing system designers want sprays having large droplets delivered at higher velocities to withstand high speeds when the car is in motion. This characteristic is referred to as dynamic performance. Additionally, the spray nozzle needs to work with cold liquid mixtures (e.g., typical windshield washer fluids comprising methanol/ethanol water mixes). This characteristic is referred to as cold performance.

For an illustrative example of how a fluidic oscillator or fluidic circuit might be employed, as shown in applicant's US patent 7651036 and illustrated in Figs 1A-1F, a nozzle assembly 10 is configured with a housing which defines a substantially hollow fluid-impermeable structure with an interior lumen and one or more ports or slots 20, each defining a substantially rectangular passage or aperture with smooth interior slot wall surfaces 22. The interior sidewall surfaces 22 are preferably dimensioned for cost effective fabrication using molding methods and preferably include sidewall grooves positioned and dimensioned to form a "snap fit" with ridges or tabs in a mating fluidic circuit insert (e.g., 18). Nozzle assembly 10 can be configured to include one or more fluidic circuit inserts or chips which are dimensioned to be tightly received in and held by the slot 20 defined within the sidewall of the housing. When fluidic circuit insert 18 is fitted tightly within port or slot 20, the nozzle assembly provides a channel for fluid communication between the housing's interior lumen and the exterior of the housing so that fluid entering the housing's interior lumen may be used to generate an oscillating spray directed distally and aimed by the orientation and configuration of the housing, but better cold performance and spray velocity are needed. Prior art windshield washer systems do not provide adequate dynamic performance (or spray velocity) and cold performance for some applications. Other fluidic nozzles are e.g. shown in US 2010/276521 A1 and FR 2 915 251 A1.

There is a need, therefore, for a durable, reliable and cost effective nozzle structure and fluid distribution or spray generation method to broaden the dynamic and cold performance envelope for nozzle assemblies to be used in automotive, industrial and consumer applications.

## OBJECTS AND SUMMARY OF THE INVENTION

Accordingly, it is an object of the present invention to overcome the above mentioned difficulties by providing a durable, reliable and cost effective nozzle structure and fluid distribution or spray generation method to broaden the dynamic and cold performance envelope for nozzle assemblies to be used in automotive, industrial and consumer applications.

Another object of the present invention is to provide a fluidic nozzle and oscillator circuit having improved dynamic and cold performance.

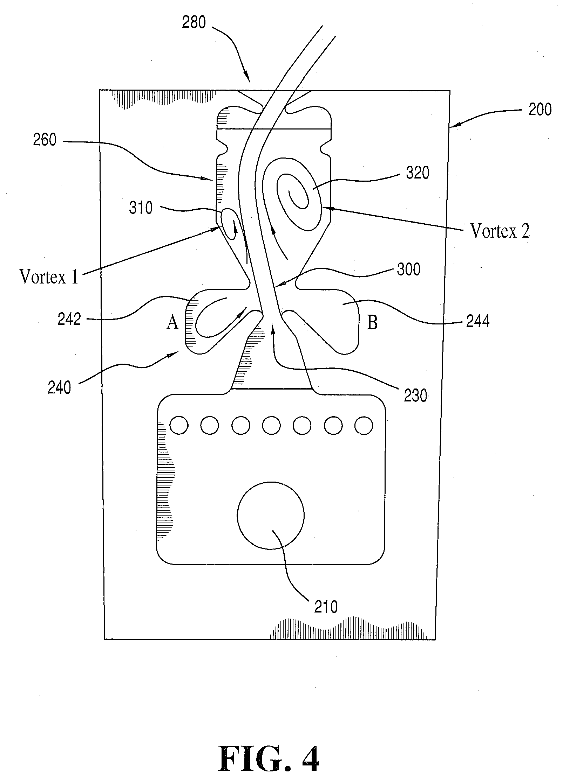

In accordance with the structure and method of the present invention, a fluidic circuit is configured as a nozzle assembly with a fluidic oscillator. Fluidic oscillators or fluidic circuits are often configured for use in housings which define a channel, port or slot that receives and provides boundaries for the fluid paths defined in the fluidic circuit. For an illustrative example of how a fluidic oscillator or fluidic circuit might be employed, as shown in applicant's US patent 7651036, Fig 4, a nozzle assembly is configured with a housing which defines a substantially hollow fluid-impermeable structure with an interior lumen and one or more ports or slots defining a substantially rectangular passage or aperture with smooth interior slot wall surfaces.

A nozzle assembly can be configured to include one or more fluidic circuit inserts or chips which are dimensioned to be tightly received in and held by the slot defined within the sidewall of the housing. When the fluidic circuit insert is fitted tightly within the housing's port or slot, the nozzle assembly provides a channel for fluid communication between the housing's interior lumen and the exterior of the housing so that fluid entering the housing's interior lumen may be used to generate an oscillating spray directed distally and aimed by the orientation and configuration of the housing.

The fluidic circuit of the present invention operates on a cyclic jet wall attachment-detachment mechanism resulting in an oscillating jet stream and subsequent spray. Current prototypes of the circuit of the present invention produce a planar spray with a fan angles from 15° to 135°. A 1st embodiment of the fluidic circuit of the present invention has a plurality of sections which cooperate with one another to act upon the flowing fluid passing therethrough to generate a desired oscillating spray. In sequence, fluid initially flows into an inlet which passes through an optional filtering section and then into a power nozzle section, where fluid then passes into a fluid jet-steering vortex generating cavity section. The cavity section's outlet is the inlet for an interaction region which terminates in a throat configured to emit the oscillating spray into the ambient environment.

A 1st prototype embodiment of the fluidic circuit of the present invention is described in terms of certain fluidic oscillator features and dimensions which affect and control the fluid flows within an interaction region within the circuit, namely:

> Pw = Width of Power Nozzle,
> Pd = Depth of Power Nozzle,
> Tw = Width of Throat,
> Td = Depth of Throat,
> $I_W$ = Width of Interaction Region,
> $I_L$ = of Interaction Region,
> Ew = InterEar Gap Width between Ears,
> $E_L$ = Axial Location of inwardly projecting tips of Ears,

> Sw = Channel Width at Setback Inlet,
> $S_L$ = Axial Length of Setback Inlet and
> $S_A$ = Setback Angle Length, or axial length of Interaction region's diverging sidewall segments beginning with Setback Inlet.

Fluid flows or enters through an inlet or feed hole into a rectangular power nozzle lumen, with dimensions Pw and Pd. There is a bell-shaped feed leading to the power nozzle which produces a fluid jet with a turbulent boundary layer that is desirable to form vortices inside an interaction region. In this first embodiment, the fluidic circuit power nozzle provides fluid to a pair of opposing symmetrical fluid vortex-steering cavities, and the size and shape of the cavities can be selected for varying sprays. Seen in plan view, circular or triangular cross section cavities have circulating flow inside them and help steer the vortex by inducing an oscillating instability to the fluid vortex or jet. An optional lateral fluid channel or slot may connect the cavities below the floor of the fluidic. Slot depth is approx. 0.1-0.2mm below the floor of the circuit. One or more slots are not a requirement for the fluidic to work and are used to make the spray uniform, depending on the application. In many automotive applications, slots are not expected to be needed. The interaction region receives the oscillating jet and generates vortices within the interaction region.

The interaction region's length begins with a narrow channel called a Setback, having the setback width Sw, setback location $S_L$ and setback angle length $S_A$. The setback width is critical for the performance of the fluidic. The setback angle length controls the uniformity of the spray, where longer lengths produce a heavy ended spray while shorter lengths produce a uniform spray. It should be noted that $S_A$ cannot be increased indefinitely and becomes undesirably monostable for large values of $S_A$. For the Interaction region, critical width and length dimensions $I_W$ and $I_L$ are sized in relation to the Power nozzle width. These dimensions may be adjusted for packaging constraints. However, dynamic & cold performance are reduced as the interaction region size is reduced below a nominal set of proportions. The Interaction region also includes a symmetrical pair of opposing inwardly projecting features called Ears. Ears cause fluid jet detachment and are critical to the bistable operation of the fluidic.

The circuit operates on a fluid jet wall attachment/detachment cycle. With the jet at the center, large vortices are formed on either or opposing (A or B) sides and the jet attaches to either the A wall or the opposing B wall. Opposing cavities on the A and B sides have varying magnitudes of positive pressure. When cavity B momentarily has a higher pressure than opposing cavity A, the jet bends away from cavity B. Fluid from cavity A replenishes the vortex, which results in jet detaching from the wall and attaching to the other wall. Pressure builds in cavity A until it is greater than pressure in cavity B. The pressure differential causes the jet to detach from wall A and attach to wall B. The cycle then continues from cavity B resulting in an oscillating bistable jet which contributes to generation of an oscillating spray with large fast droplets, when using typical windshield washing fluid. A nozzle assembly with this fluidic exhibits the desired improved dynamic and cold performance.

The above and still further features and advantages of the present invention will become apparent upon consideration of the following detailed description of a specific embodiment thereof, particularly when taken in conjunction with the accompanying drawings, wherein like reference numerals in the various figures are utilized to designate like components.

## BRIEF DESCRIPTION OF THE DRAWINGS

Figs 1A-1F illustrate fluidic oscillating circuit characteristics, generally, and an example of applicant's prior art nozzle assembly as described and illustrated in commonly owned US patent 7651036. ]

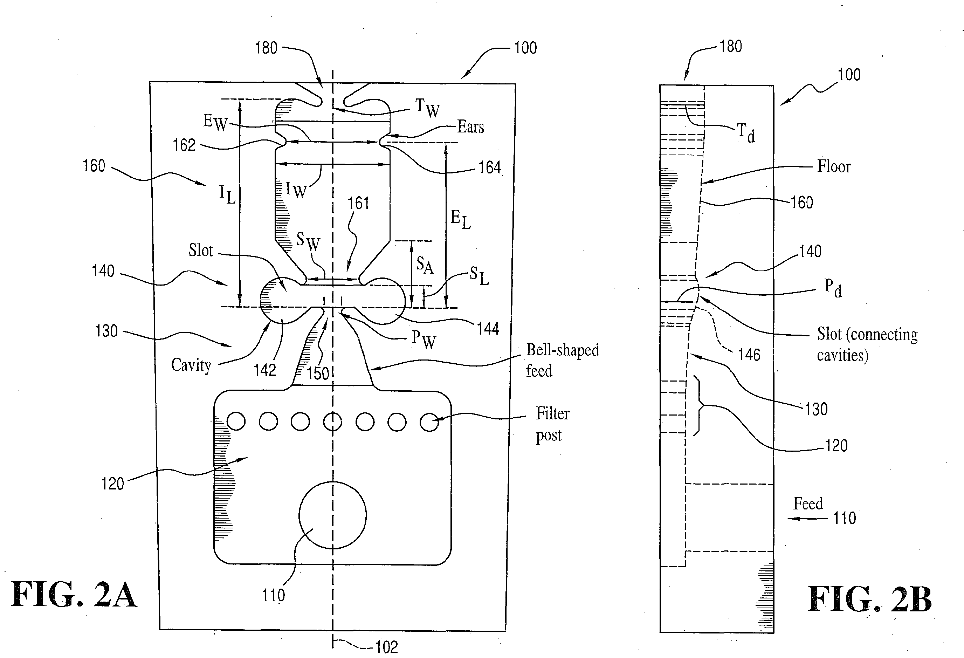

Fig 2A illustrates, in elevation, a fluidic oscillator with structural features for generating an oscillating spray with large, fast droplets, when using typical windshield washing fluid and providing improved dynamic and cold performance, in accordance with the present invention.

Fig 2B illustrates, a side view in elevation and hidden cross section, the fluidic oscillator with structural features of Fig. 2A, taken along a transverse plane aligned along the central axis defined as a line extending from the center of the feed inlet to the center of the Throat, in accordance with the present invention.

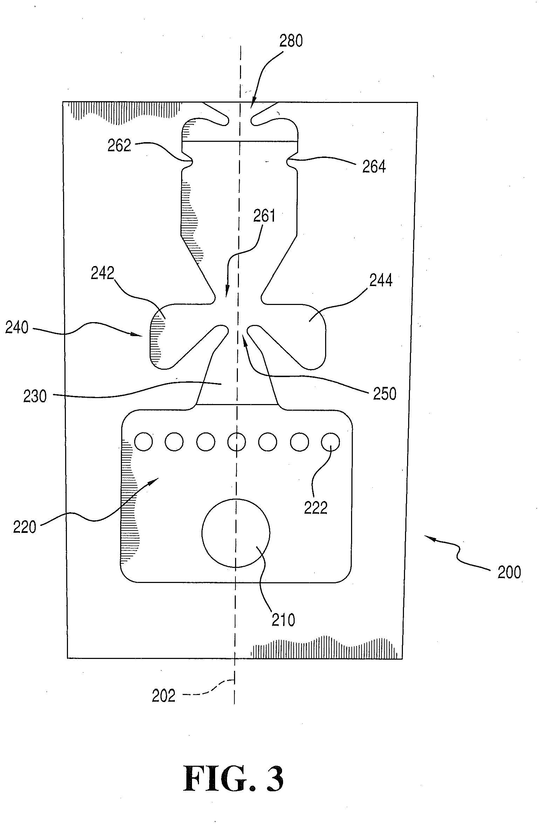

Fig 3 illustrates, in elevation, an alternative embodiment of a fluidic oscillator with triangular cavities configured to promote circular flow within each cavity and help induce oscillating instability in the fluid jet, in accordance with the present invention.

Fig 4 illustrates, in elevation, the fluidic oscillator with triangular cavities of Fig. 2, showing how circular flow within each cavity generates vortices which induce oscillating instability in the fluid jet, in accordance with the present invention.

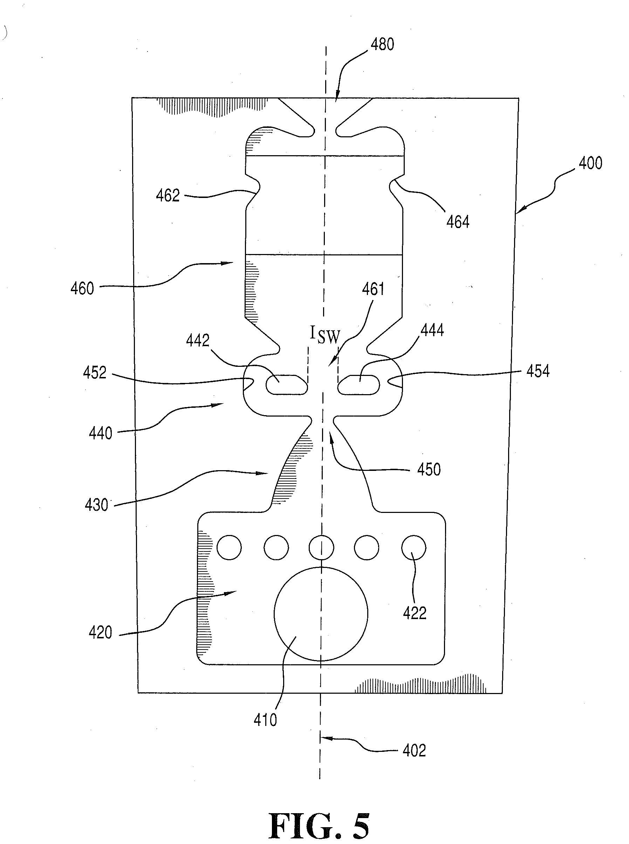

Fig 5 illustrates, in elevation, another embodiment of a fluidic oscillator circuit (the "owl" circuit) with Island features having a selected width to promote circular flow within each cavity and help induce oscillating instability in the fluid jet, in accordance with the present invention.

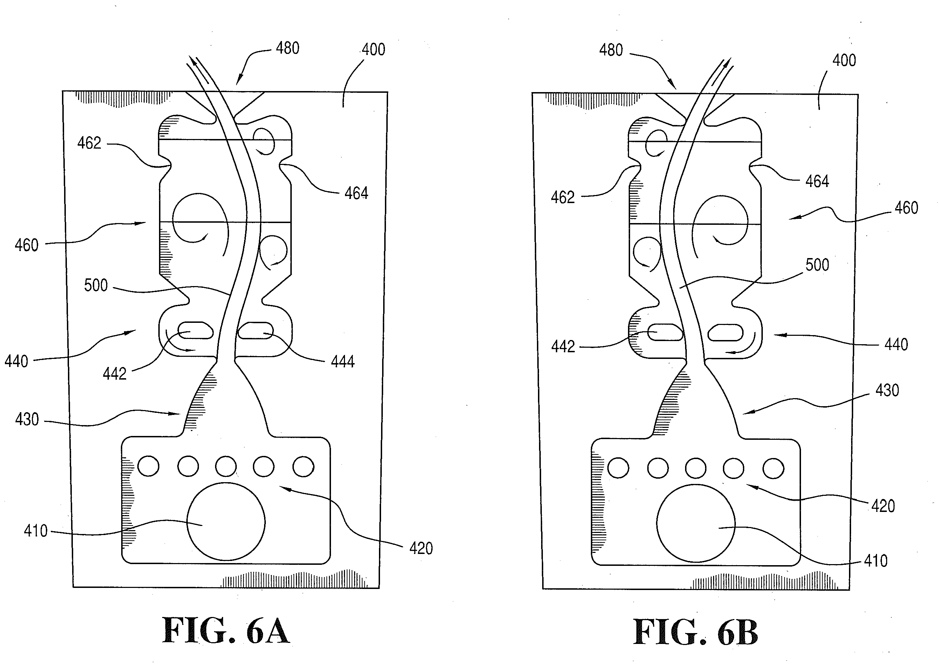

Fig 6A illustrates, in elevation, the fluidic oscillator with island features of Fig. 4, showing how alternating entrainment directions for a fluid jet generates flows which cause the central flow of the jet to oscillate toward a first (e.g., right) side of the chamber, in accordance with the present invention.

Fig 6B illustrates, in elevation, the fluidic oscillator with island features of Figs. 4 and 5A, showing how alternating entrainment directions for a fluid jet generates flows which cause the central flow of the jet to oscillate toward a second (e.g., left) side of the chamber, in accordance with the present invention.

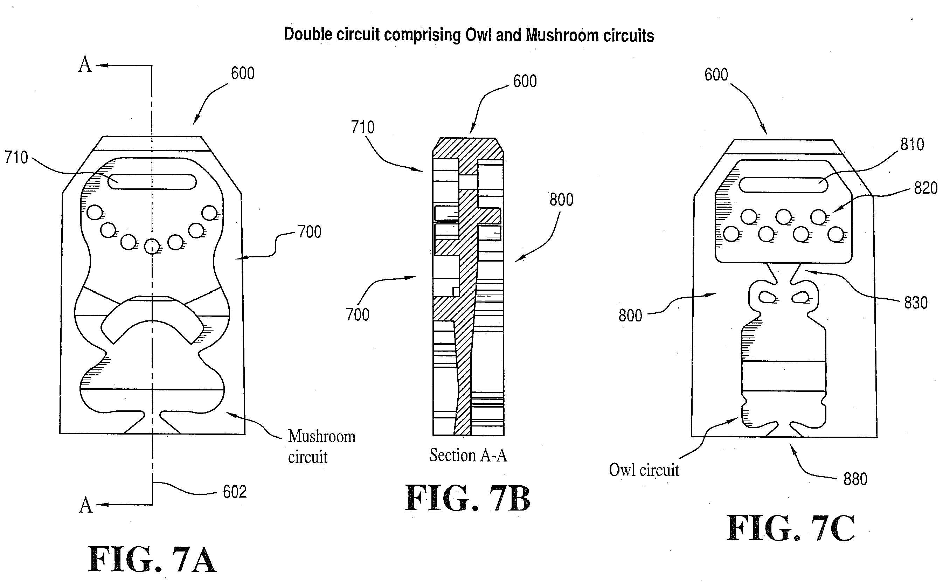

Figs 7A, 7B and 7C illustrate fluidic nozzle with a first fluidic oscillator (e.g., a "mushroom") circuit and second fluidic oscillator (e.g., an "owl") circuit for generating first and second oscillating sprays, where the second oscillating spray has large, fast droplets, when using typical windshield washing fluid and providing improved dynamic and cold performance, in accordance with the present invention.

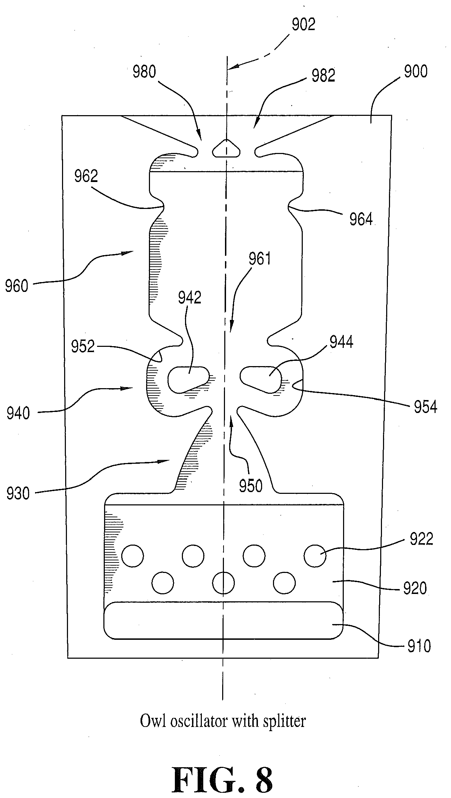

Fig 8 illustrates, in elevation, another embodiment of a fluidic oscillator (e.g., an "owl") circuit with Island features having a selected width to promote circular flow within each cavity and help induce oscillating instability in the fluid jet and having a splitter feature at the Throat, in accordance with the present invention.

## DESCRIPTION OF THE PREFERRED EMBODIMENT

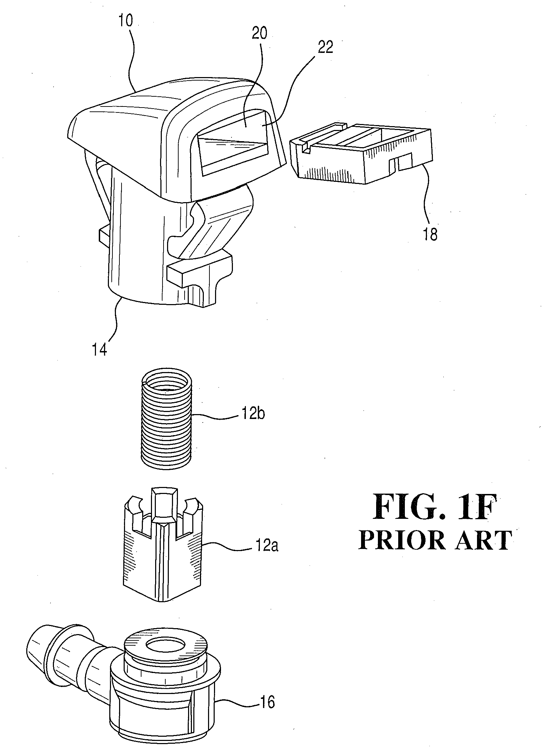

Referring now to Figs 1A-8, a new nozzle assembly is configured with a new fluidic oscillator circuit. Fluidic oscillators or fluidic circuits are often configured for use in housings (e.g., as shown in Fig. 1F) which define a channel, port or slot that receives and provides boundaries for the fluid paths defined in the fluidic circuit. For an illustrative example of how a fluidic oscillator or fluidic circuit might be employed, as shown in applicant's US patent 7651036, nozzle assembly 10 is configured with a housing which defines a substantially hollow fluid-impermeable structure with an interior lumen and one or more ports or slots 20, each defining a substantially rectangular passage or aperture with smooth interior slot wall surfaces 22. The interior sidewall surfaces 22 are preferably dimensioned for cost effective fabrication using molding methods and preferably include sidewall grooves positioned and dimensioned to form a "snap fit" with ridges or tabs in a mating fluidic circuit insert (e.g., 18). Nozzle assembly 10 can be configured to include one or more fluidic circuit inserts or chips which are dimensioned to be tightly received in and held by the slot 20 defined within the sidewall of the housing. When fluidic circuit insert 18 is fitted tightly within port or slot 20, the nozzle assembly provides a channel for fluid communication between the housing's interior lumen and the exterior of the housing so that fluid entering the housing's interior lumen may be used to generate an oscillating spray directed distally and aimed by the orientation and configuration of the housing.

The fluidic circuits of the present invention as illustrated in Figs 2A-8 operate on a cyclic fluid jet to wall attachment-detachment mechanism resulting in an oscillating jet stream and subsequent spray. Current prototypes of the circuit of the present invention produce a substantially planar spray with a fan angles from 15° to

135°.

The 1st embodiment of the fluidic circuit of the present invention 100 as illustrated in Figs 2A and 2B has a plurality of sections which cooperate with one another to act upon the flowing fluid passing therethrough to generate a desired oscillating spray. The fluid flows from inlet 110 through the sections described below and is emitted as an oscillating spray of fluid droplets from the throat or outlet 180, and, for purposes of nomenclature, a central or flow axis 102 is defined as a straight line extending from the center of the feed inlet 110 to the center of the throat opening 180. Fig 2A illustrates, in elevation, a plan view of the structural features fluidic oscillator 100 and Fig 2B illustrates a side view in elevation and hidden cross section of fluidic oscillator 100 with structural features of Fig. 2A shown in dotted or hidden lines representing a view from a cross section taken along a transverse plane aligned along central axis 102.

In sequence, fluid initially flows into inlet lumen 110 and then flows through interstitial spaces between an array of inwardly projecting post elements 122 defining an optional filtering section 120 and then into a bell shaped feed terminating distally in a power nozzle 150, where the fluid then passes into a fluid jet-steering cavity section 140. The cavity section's jet outlet is the inlet 161 for a vortex generating interaction region 160 which terminates distally in a throat 180 configured to emit an oscillating spray of fluid droplets into the ambient environment. The spray is a substantially planar oscillating fan aimed in the direction of the fluid flow central axis 102 having a selected fan angle width of greater than 60 degrees.

Fluidic circuit 100 is best described in terms of certain features and structural elements configured with specifically selected dimensions, namely,

$P_W$ = Width of Power Nozzle 150,
$P_D$ = Depth of Power Nozzle 150,
$T_w$ = Width of Throat 180,
$T_d$ = Depth of Throat 180,
$I_W$ = Width of Interaction Region 160,
$I_L$ = of Interaction Region 160,
$E_w$ = InterEar Gap Width between Ears 162, 164,
$E_L$ = Axial Location of inwardly projecting tips of Ears 162, 164,
$S_w$ = Channel Width at Setback Inlet 161,
$S_L$ = Axial Length of Setback Inlet 161 and
$S_A$ = Setback Angle Length, or axial length of Interaction region's diverging sidewall segments beginning with Setback Inlet 161.

In operation, pressurized fluid flows into or enters through an inlet 110 or feed hole into the power nozzle 130 which terminates distally in a rectangular opening with a width dimension ("$P_W$") and a depth dimension ("$P_D$"). There is a bell-shaped feed 130 leading to the power nozzle 150 which produces an accelerating fluid jet with a turbulent boundary layer that is desirable to form vortices inside interaction region 160. In this first embodiment, the fluidic circuit power nozzle 150 provides fluid to a jet-steering cavity section 140 which includes a first lateral fluid jet-steering cavity 142 opposite a second fluid jet-steering cavity 144, thus providing a pair of opposing, symmetrical fluid jet-steering cavities 142, 144. The size and shape of the cavities is identical, but mirror imaged and can be configured for varying fluid jet steering performance properties.

Seen in the plan view of Fig. 2A, circular cross section cavities 142, 144 will generate circulating flow within each cavity and the resultant time-varying, colliding flows caused within fluid jet-steering cavity section 140 help steer the resultant fluid jet forced into Interaction Region 160 by inducing an oscillating instability to the fluid which generates first and second vortices within Interaction Region 160 (e.g., like vortices 310, 320, as seen in Fig. 4). An optional lateral fluid channel, trough or slot 146 may connect and provide fluid communication between the cavities 142, 144 below the floor of the fluidic (as best seen in Fig. 2B. Depth of slot 146 is approx. 0.1-0.2mm below the floor of the circuit 100. One or more slots are not a requirement for the fluidic to cause and maintain oscillation but may be used to make the spray uniform, depending on the application. In many automotive applications, slots (like 146) are not expected to be needed.

The interaction region 160 receives the oscillating jet and the interaction region's interior begins with a narrow channel inlet called a Setback inlet 161, having a selected setback inlet width ("$S_W$"). The flowpath or axial location of Setback Inlet 161 downstream from the power nozzle 150 is called the setback location ("$S_L$") and setback angle length ("$S_A$") may be characterized as the flowpath length (or the axial length along axis 102) for the Interaction region's diverging sidewall segments beginning with setback inlet 161. The setback width or lateral width of setback inlet 161 can be used to optimize the performance of fluidic 100 with a variety of fluids. For example, given a $P_W$ of 0.5mm (and with no connecting slot 146), inlet width $S_W$ should be greater than 1.35mm for a bistable operation. For values of $S_W$ less than 1.35mm, the fluidic 100 will not reliably cause or maintain oscillation, (i.e., fluid flow is monostable). However, with a transverse connecting slot 146, a narrower inlet ($S_W$ < 1.35mm) is permissible for bistable operation. Thus, for bistable (i.e., oscillating vortex) operation, a wider inlet width ($S_w > 2.7P_w$) works for a prototype circuit with no slot and a slightly narrower inlet ($S_w > 2P_w$) works for circuit with a slot 146.

The setback angle length $S_A$ controls the uniformity of the spray, where longer lengths produce a heavy ended spray (similar to that shown in Fig. 1E) while shorter lengths produce a uniform spray. It should be noted that setback length $S_A$ cannot be increased indefinitely and the fluidic's performance tends toward monostable operation for larger values of $S_A$. Applicant's experiments have shown that, generally for $S_A > 4P_w$, the

fluidic's performance (for circuit 100) becomes undesirably monostable. Preferably, the power nozzle to setback inlet length $S_L$ is slightly more than (e.g., 1.2 times) Pw and is not a critical dimension when compared to Sw and $S_A$.

For the interaction region 160, interaction region width ("$I_W$") and interaction region length ("$I_L$") dimensions configured and sized in relation to the width of power nozzle 150, where $I_W$ is 6.5 times $P_W$ and $I_L$ is typically 11 times $P_W$. These values may be adjusted for packaging constraints. However, dynamic & cold performance are reduced as the size of interaction region 160 is reduced below this nominal set of proportions. As best seen in Fig. 2A, the interaction region 160 also includes a symmetrical pair of opposing inwardly projecting substantially triangular sectioned ears 162, 164, which each project from a wider proximal base and terminate distally in a radiussed tip. Ears 162, 164 are preferably equal in size and are aligned along a transverse axis at a position which is downstream from the setback inlet 161 of interaction region 160. Absence of ears 162, 164 makes the circuit 100 monostable.

Critical dimensions for the opening between the tips of ears 162, 164 ("$E_W$") are:

(a) the lateral width of the inter-ear gap between the inwardly projecting distal ends of the opposing ears, and
(b) the axial length of the fluid's path or channel from the power nozzle 150 to the transverse axis of the inwardly projecting ears ("$E_L$").

Applicant's experiments have led to the conclusion that proper oscillating (i.e., bistable, rather than monostable) operation is obtained when $E_W$ is approx. 5.2 times Pw and $E_L$ is in the range of 8.5($P_W$) to 9.2($P_W$).

Referring now to Fig 3, fluidic circuit 200 is similar to that illustrated in Figs 2A and 2B but differs in having triangular section cavities 242, 244. As above, fluidic circuit 200 has a plurality of sections which cooperate with one another to act upon the flowing fluid passing therethrough to generate the desired oscillating spray. In sequence, fluid initially flows into an inlet 210 which passes through an optional filtering section 220 and then into a power nozzle section 230, where fluid then passes into a fluid jet-steering cavity section 240. The cavity section's outlet is the inlet for an interaction region 260 which terminates in a throat 280 configured to emit the oscillating spray into the ambient environment. The fluid flows from inlet 210 through the sections described below and is emitted as an oscillating spray of fluid droplets from the throat or outlet 280, and, for purposes of nomenclature, a central or flow axis 202 is defined as a straight line extending from the center of the feed inlet 210 to the center of the throat opening 280.

In sequence, fluid initially flows into inlet lumen 210 and then flows through interstitial spaces between an array of inwardly projecting post elements 222 defining an optional filtering section 220 and then into a bell shaped feed 230 terminating in a power nozzle 250, where the fluid then passes into a fluid jet-steering cavity section 240. The cavity section's jet outlet 261 is the inlet for a vortex generating interaction region 260 which terminates distally in a throat 280 configured to emit an oscillating spray of fluid droplets into the ambient environment.

Fluidic circuit 200 is best described in terms of similar features and structural elements configured with specifically selected dimensions, namely,

$P_W$ = Width of Power Nozzle 250,
$P_D$ = Depth of Power Nozzle 250,
Tw = Width of Throat 280,
Td = Depth of Throat 280,
$I_W$ = Width of Interaction Region 260,
$I_L$ = of Interaction Region 260,
$E_W$ = InterEar Gap Width between Ears 262, 264,
$E_L$ = Axial Location of inwardly projecting tips of Ears 262, 264,
Sw = Channel Width at Setback Inlet 261,
$S_L$ = Axial Length of Setback Inlet 261 and
$S_A$ = Setback Angle Length, or axial length of Interaction region's diverging sidewall segments beginning with Setback Inlet 261.

In operation, pressurized fluid flows into or enters through an inlet 210 or feed hole into the bell shaped feed 230 terminating distally in a rectangular power nozzle opening 250 with a width dimension ("$P_W$") and a depth dimension ("$P_D$"). The bell-shaped feed 230 leads to power nozzle 250 and which produces an accelerating fluid jet with a turbulent boundary layer that is desirable to form vortices inside interaction region 260. In this second embodiment, the fluidic circuit power nozzle 250 provides fluid to a jet-steering cavity section 240 which includes a first lateral fluid jet-steering cavity 242 opposite a second fluid jet-steering cavity 244, thus providing a pair of opposing, symmetrical fluid jet-steering cavities 242, 244. The size and substantially triangular shape of the cavities is identical, but mirror imaged and can be configured for varying fluid jet steering performance properties.

Seen in the plan views of Figs. 3 and 4, triangular cross section cavities 242, 244 will generate circulating flow within each cavity and the resultant time-varying, colliding flows caused within fluid jet-steering cavity section 240 help steer the resultant fluid jet forced into Interaction Region 260 by inducing an oscillating instability to the fluid which generates first and second vortices within Interaction Region 260 (e.g., vortices 310, 320, as seen in Fig. 4). An optional lateral fluid channel, trough or slot may connect and provide fluid communication between the cavities 242, 244 below the floor of the fluidic (not shown, but similar to slot 146 as best seen in Fig. 2B). If included, the depth of the optional lateral slot is approx. 0.1-0.2mm below the floor of the circuit 200. One or more slots are not a requirement for the fluidic 200 to cause and maintain oscillation but may be used to make the spray uniform, depending on the application. In many automotive applications, slots are not expected to be needed.

The interaction region 260 receives the oscillating jet and the interaction region's interior begins with a narrow channel inlet called a Setback inlet 261, having a selected setback inlet width ("$S_W$"). The flowpath or axial location of Setback Inlet 261 downstream from the power nozzle 250 is called the setback location ("$S_L$") and setback angle length ("$S_A$") may be characterized as the flowpath length (or the axial length along axis 202) for the Interaction region's diverging sidewall segments beginning with setback inlet 261. The setback width or lateral width of setback inlet 261 can be used to optimize the performance of fluidic 200 with a variety of fluids. For example, given a $P_W$ of 0.5mm (and with no connecting slot 146), inlet width $S_W$ should be greater than 1.35mm for a bistable operation. For values of $S_W$ less than 1.35mm, the fluidic 100 will not reliably cause or maintain oscillation, (i.e., fluid flow is monostable). However, with a transverse connecting slot (not shown), a narrower inlet ($S_W$ < 1.35mm) is permissible for bistable operation. Thus, for bistable (i.e., oscillating vortex) operation, a wider inlet width (Sw>2.7Pw) works for a prototype circuit with no slot and a slightly narrower inlet (Sw>2Pw) works for circuit with a slot. The setback angle length controls the uniformity of the spray, where longer lengths produce a heavy ended spray (similar to that shown in Fig. 1E) while shorter lengths produce a uniform spray. It should be noted that setback length $S_A$ cannot be increased indefinitely and the fluidic's performance tends toward monostable operation for larger values of $S_A$. Applicant's experiments have shown that, generally for $S_A$ > 4Pw, the fluidic's performance (for circuit 200) becomes undesirably monostable. Preferably, the power nozzle to setback inlet length $S_L$ is slightly more than (e.g., 1.2 times) Pw and is not a critical dimension when compared to Sw and $S_A$.

For the interaction region 260, interaction region width ("$I_w$") and interaction region length ("$I_L$") dimensions configured and sized in relation to the width of power nozzle 250, where $I_w$ is 6.5 times $P_W$ and $I_L$ is typically 11 times $P_W$. These values may be adjusted for packaging constraints. However, dynamic & cold performance are reduced as the size of interaction region 260 is reduced below this nominal set of proportions. As best seen in Fig. 3, the interaction region 260 also includes a symmetrical pair of opposing inwardly projecting substantially triangular sectioned ears 262, 264, which each project from a wider proximal base and terminate distally in a radiussed tip. Ears 262, 264 are preferably equal in size and are aligned along a transverse axis at a position which is downstream from the setback inlet 261 of interaction region 260. Absence of ears 262, 264 makes the circuit 200 monostable.

As above, critical dimensions for the opening between the tips of ears 262, 264 ("$E_W$") are:

  (a) the lateral width of the inter-ear gap between the inwardly projecting distal ends of the opposing ears, and
  (b) the axial length of the fluid's path or channel from the power nozzle 250 to the transverse axis of the inwardly projecting ears ("$E_L$").

Applicant's experiments have led to the conclusion that proper oscillating operation is obtained when $E_W$ is approx. 5.2 times Pw and $E_L$ is in the range of 8.5($P_W$) to 9.2($P_W$).

Fluidic circuits 100 and 200 each operate on a jet wall attachment/detachment cycle, as illustrated in Fig 4. With the flowing fluid jet 300 at the center, substantially aligned with the fluidic's central axis (102 or 202), large vortices 310, 320 are formed on both sides and the jet 300 attaches to a wall within interaction region 260. Cavities 242 (or A) and 246 (or B) have periodically varying magnitudes of positive pressure over time. When cavity B momentarily has a higher pressure than opposing cavity A, the jet 300 bends away from higher pressure cavity B. In that instant, fluid from lower pressure cavity A replenishes the vortex 310, which results in jet 300 detaching from the interaction region sidewall segment adjacent to the replenishing cavity and moving across and then attaching to the other sidewall segment adjacent the opposite cavity. Pressure builds in cavity A until it is greater than pressure in cavity B. The pressure differential causes the jet 300 to detach from the interaction region sidewall segment adjacent cavity A and attach to the interaction region sidewall segment adjacent cavity B. The cycle then continues as pressure increases in cavity B, resulting in an oscillating bistable jet 300 which contributes to generation of an oscillating spray from the throat (180 or 280), when using typical windshield washing fluid.

The longer the setback angle length $S_A$, the longer jet 300 dwells at each wall (A side or B side) resulting in a "heavy ended" spray from the throat 280. The inwardly projecting opposing ears (e.g., 262, 264) enable the bistability of the jet oscillation. In absence of the ears, vortex 310 is large (extending the entire length of the interaction region 260) and cannot be adequately replenished, resulting in no wall detachment and monostable operation. Critical ear configuration and placement values ($E_W$ and $E_L$) are chosen to optimize cold performance characteristics, (i.e. bistable operation even with washer fluids of higher viscosity). Generally this ranges from 50% methanol - 50% water (9cP) to 50% ethanol - 50% water mix (22cP). Similarly, critical setback dimensions Sw and Sa are chosen for optimized cold performance.

Turning now to Figs 5, 6A and 6B, an alternative embodiment fluidic circuit 400 provides a useful alternative with certain improvements over the circuit 100, 200 illustrated in Figs 2A, 2B, 3 and 4. Fluidic circuit 400 has first and second islands 442, 444 introduced into fluid jet steering section 440 as shown in Fig 5 and first and second islands 442, 444 have an associated dimension called the island width ("$I_{SW}$"). In the illustrated configuration, circuit 400 is referred to as the "owl" circuit because of its resemblance to an owl. Fluidic circuit 400 is operationally similar to those illustrated in Figs 2A-4 and has a plurality of sections which cooperate with one another to act upon the flowing fluid passing therethrough to generate the desired oscillating spray. In sequence, fluid initially flows into an inlet 410 which passes through an optional filtering section 420 and then into a power nozzle section 430, where fluid then passes into the fluid jet-steering island section 440. The island section's outlet is the inlet for interaction region 460 which terminates in a throat 480 configured to emit the oscillating spray into the ambient environment. Fig 5 illustrates, in elevation, a plan view of the structural features fluidic oscillator 400 which also has a central or flowpath axis 402.

In sequence, fluid initially flows into inlet lumen 410 and then flows through interstitial spaces between an array of inwardly projecting post elements 422 defining an optional filtering section 420 and then into a bell shaped feed terminating distally in a power nozzle 450, where the fluid then passes into a fluid jet-steering section 440. The jet steering section's jet outlet is the inlet 461 for a vortex generating interaction region 460 which terminates distally in throat 480 which is configured to emit an oscillating spray of fluid droplets into the ambient environment.

Fluidic circuit 400 is best described in terms of certain features and structural elements configured with specifically selected dimensions, namely,

$P_W$ = width of power nozzle 450,
$P_D$ = depth of power nozzle 450,
$T_w$ = width of throat 480,
$T_d$ = depth of throat 480,
$I_W$ = transverse width of interaction region 460,
$I_L$ = axial length of interaction region 460,
$I_{SW}$ = separation width between islands 442, 444
$E_w$ = inter-ear gap width between ears 462, 464,
$E_L$ = axial location of inwardly projecting tips of ears 462, 464,
$S_w$ = channel width at Setback Inlet 461,
$S_L$ = axial length of setback inlet 461 and
$S_A$ = setback angle length, or axial length of interaction region's diverging sidewall segments beginning with Setback Inlet 461.

Pressurized fluid flows into or enters through an inlet 410 or feed hole into the power nozzle 450 which is preferably a rectangular opening with a width dimension ("$P_W$") and a depth dimension ("$P_D$"). There is a bell-shaped feed 430 leading to the power nozzle 450 which produces an accelerating fluid jet with a turbulent boundary layer that is desirable to form vortices inside interaction region 460. In this embodiment, the fluidic circuit power nozzle 450 provides fluid to a jet-steering section 440 which includes a first laterally offset fluid jet-steering island 442 opposite a second fluid jet-steering island 444, thus providing a pair of opposing, symmetrical fluid jet-steering islands 442, 444 separated by a central opening defined by the island separation width ("$I_{SW}$"). The size and shape of the islands is identical, but mirror imaged and can be configured for varying fluid jet steering performance properties.

As best seen in the plan view of Fig 5, a first island 442 is laterally offset from central axis 402 along the fluid flow path and spaced from a first curved fluid jet steering interaction region sidewall segment 452 which defines a first jet steering lumen and extends from a first side the power nozzle 450 to a first side of the inlet of the interaction region 460 and is contiguous with a first angled sidewall segment of the interaction region 460. Symmetrically, a second island 444 is laterally offset from central axis 402 along the fluid flow path and spaced from a second curved fluid jet steering interaction region sidewall segment 454 which defines a second jet steering lumen and extends from a second side of power nozzle 450 to the inlet of a second side the interaction region 460 and is contiguous with a second angled sidewall segment of the interaction region 460 which thereby defines an oscillation chamber. Fluid jet steering section 440 thus comprises a first fluid jet steering lumen proximate first island 442 which defines a first fluid pressure accumulating volume opposite the second fluid jet steering lumen proximate second island 444 to define a second fluid pressure accumulating volume. The first fluid jet steering lumen and said second fluid jet steering lumen are thus in fluid communication with one another and with power nozzle 450, and the fluid jet steering section 440 is in fluid communication with and emits a fluid jet into the oscillation inducing interaction region 460 which functions as an oscillation chamber.

As illustrated in the plan view of Fig. 5, Islands 442, 444 and the first and second jet steering lumens they define will generate circulating flow within each jet steering lumens and the resultant time-varying, colliding flows caused within fluid jet-steering cavity section 440 help steer the resultant fluid jet forced into Interaction Region 460 by inducing an oscillating instability to the fluid which generates first and second vortices within Interaction Region 460 (e.g., resembling vortices 310, 320, as seen in Fig. 4).

The interaction region 460 receives the oscillating jet and the interaction region's interior begins with a narrowed channel inlet called a Setback inlet 461, having a selected setback inlet width ("$S_W$"). The flowpath or axial location of Setback Inlet 461 downstream from the power nozzle 450 is called the setback location ("$S_L$") and setback angle length ("$S_A$") may be characterized as the flowpath length (or the axial length along axis 402) for the Interaction region's angled or diverging first and second sidewall segments beginning with setback inlet 461. The setback width or lateral width of setback inlet 461 can be used to optimize the performance of fluidic 400 with a variety of fluids. For example, given a $P_W$ of 0.5mm and with no connecting slot (e.g. such as transverse slot 146 described for fluidic 100, above), inlet width $S_W$ should be greater than 1.35mm for a bistable operation. For values of $S_W$ less than 1.35mm, the fluidic 400 will not reliably cause or maintain oscillation, (i.e., fluid flow is monostable). However, with a transverse connecting slot 146, a narrower inlet ($S_W < 1.35mm$) is permissible for bistable operation. Thus, for bistable (i.e., oscillating vortex) operation, a wider inlet width (Sw>2.7Pw) works for a prototype circuit with no slot and a slightly narrower inlet (Sw>2Pw) works for circuit with a slot (e.g., 146). The setback angle length controls the uniformity of the spray, where longer lengths produce a heavy ended spray (similar to that shown in Fig. 1E) while shorter lengths produce a uniform spray. It should be noted that setback length $S_A$ cannot be increased indefinitely and the fluidic's performance tends toward monostable operation for larger values of $S_A$. Applicant's experiments have shown that, generally for $S_A > 4Pw$, the fluidic's performance (for circuit 100) becomes undesirably monostable. Preferably, the power nozzle to setback inlet length $S_L$ is slightly more than (e.g., 1.2times) Pw and is not a critical dimension when compared to Sw and $S_A$.

For the interaction region 460, interaction region width ("$I_w$") and interaction region length ("$I_L$") dimensions configured and sized in relation to the width of power nozzle 450, where $I_w$ is 6.5 times $P_W$ and $I_L$ is typically 11 times $P_W$. These values may be adjusted for packaging constraints. However, dynamic & cold performance are reduced as the size of interaction region 460 is reduced below this nominal set of proportions. As best seen in Fig. 5, the interaction region 460 also includes a symmetrical pair of opposing inwardly projecting substantially triangular sectioned ears 462, 464, which each project from a wider proximal base and terminate distally in a radiussed tip. Ears 462, 464 are preferably equal in size and are aligned along a transverse axis at a position which is downstream from the setback inlet 461 of interaction region 460. Absence of ears 462, 464 makes the circuit 400 monostable.

Critical dimensions for the opening between the tips of ears 462, 464 ("$E_W$") are:

(a) the lateral width of the inter-ear gap between the inwardly projecting distal ends of the opposing ears, and
(b) the axial length of the fluid's path or channel from the power nozzle 450 to the transverse axis of the inwardly projecting ears ("$E_L$").

Applicant's experiments have led to the conclusion that proper oscillating operation is obtained when $E_W$ is approx. 5.2 times Pw and $E_L$ is in the range of $8.5(P_W)$ to $9.2(P_W)$.

In the illustrated embodiment for circuit 400, proper operation was confirmed when the following relationships were maintained: Isw=1.2Pw - 1.3Pw and Sw=3.5Pw-3.8Pw.

For the embodiment of Figs 5-6B, Since Isw is slightly larger than Pw, the jet 500 sets up entrainment along the channels as illustrated in time sequenced views Figs 6A and 6B. Entrainment alternates from each side and jet 500 moves from one wall to another resulting in an oscillating output. Note that the relative size and shape of the cavity-like jet steering lumens in section 440 have been reduced from the triangular cavities in the comparable jet steering section 240 for fluidic 200, as illustrated in Fig 3.

Turning now to the nozzle assembly insert embodiment illustrated in Figs 7A, 7B and 7C, a two-sided fluidic circuit substrate, insert or chip 600 is configured with a first oscillator configuration 700 defined within the surface of a first side and a second oscillator configuration 800 defined within the opposing surface of a second side of fluidic circuit insert 600, opposite the first side of fluidic circuit insert 600. The mushroom fluidic circuit oscillator 700 and the owl fluidic circuit oscillator 800 are combined into a single solid chip on opposing sides of chip substrate 600 to produce a fluidic oscillator insert for use in double-spray nozzle assembly. The sprays produced by the circuits 700, 800 can be selected to differ, and complement one another. For example the mushroom fluidic circuit 700 can produce a spray having a 60° fan angle or spray width while the owl fluidic circuit 800 is configured to simultaneously generate a spray having a 45° fan angle to accommodate the shape of a vehicle's windshield or another desired target surface, depending on the desired spray pattern. The feed hole or inlet 710 is preferably located on the side of the insert 600 carrying the mushroom fluidic circuit and an elongated slot-shaped inlet 810 is defined through the substrate of chip 600 to provide shared fluid communication with incoming pressurized fluid so that both fluidic circuits can be supplied with pressurized fluid flow from a common source, simultaneously.

Turning now to Fig. 8, a split throat owl circuit fluidic 900 has a throat aperture 980 configured with an inwardly projecting splitter member 982. Like the "Owl circuit 400, fluidic circuit 900 has first and second islands 942, 944 introduced into fluid jet steering section 940 as shown in Fig 8 and first and second islands 942, 944 are spaced apart by a transverse gap or island separation width ("$I_{SW}$"). In the illustrated configuration, circuit 900 is operationally similar to those illustrated in Figs 5-6B and has a plurality of sections which cooperate with one another to act upon the flowing fluid passing therethrough to generate the desired oscillating spray. In sequence, fluid initially flows into inlet 910 and passes through an optional filtering section 920 and then into a tapered inlet section 930 terminating in power nozzle 950, where fluid then passes into the fluid jet-steering island section 940. The island section's outlet is the inlet for interaction region 960 which terminates in a throat 980 configured to emit the oscillating spray into the ambient environment. Fig 8 illustrates, in elevation, a plan view of the structural features fluidic oscillator 900 which also has a central or flowpath axis 902.

In sequence, fluid initially flows into inlet lumen slot 910 and then flows through interstitial spaces between the array of inwardly projecting post elements 922 defining optional filtering section 920 and then into a bell shaped feed terminating distally in a power nozzle 950, where the fluid then passes into a fluid jet-steering section 940. The jet steering section's jet outlet is the inlet 961 for a vortex generating interaction region 960 which terminates distally in split throat 980 which is configured to emit an oscillating spray of fluid droplets into the ambient environment.

Fluidic circuit 900 is best described in terms of certain features and structural elements configured with specifically selected dimensions, namely,

$P_W$ = width of power nozzle 950,
$P_D$ = depth of power nozzle 950,
Tw = width of split throat 980,
Td = depth of throat 980,
$I_W$ = transverse width of interaction region 960,
$I_L$ = axial length of interaction region 960,
$I_{SW}$ = separation width between islands 942, 944
Ew = inter-ear gap width between ears 962, 964,
$E_L$ = axial location of inwardly projecting tips of ears 962, 964,
Sw = channel width at Setback Inlet 961,
$S_L$ = axial length of setback inlet 961 and
$S_A$ = setback angle length, or axial length of interaction region's diverging sidewall segments beginning with Setback Inlet 961.

Pressurized fluid flows into or enters through an inlet 910 or feed hole into the power nozzle 450 which is preferably a rectangular opening with a width dimension ("$P_W$") and a depth dimension ("$P_D$"). Bell-shaped feed 930 leads to the power nozzle 950 which produces an accelerating fluid jet with a turbulent boundary layer that is desirable to form vortices inside interaction region 960. In this embodiment, the fluidic circuit power nozzle 950 provides fluid to jet-steering section 940 which includes a first laterally offset fluid jet-steering island 942 opposite a second fluid jet-steering island 944, thus providing a pair of opposing, symmetrical fluid jet-steering islands 942, 944 separated by a central opening defined by the island separation width ("$I_{SW}$"). The size and shape of the islands is identical, but mirror imaged and the islands can be configured for varying fluid jet steering performance properties.

First island 942 is laterally offset from central axis 902 along the fluid flow path and spaced from a first curved fluid jet steering interaction region sidewall segment 952 which defines a first jet steering lumen and extends from a first side the power nozzle 950 to a first side of the inlet of the interaction region 960 and is contiguous with a first angled sidewall segment of the interaction region 960. Symmetrically, a second island 944 is laterally offset from central axis 902 along the fluid flow path and spaced from a second curved fluid jet steering interaction region sidewall segment 954 which defines a second jet steering lumen and extends from a second side of power nozzle 950 to the inlet of a second side the interaction region 960 and is contiguous with a second angled sidewall segment of the interaction region 960 which thereby defines an oscillation chamber. Fluid jet steering section 940 thus comprises a first fluid jet steering lumen proximate first island 942 which defines a first fluid pressure accumulating volume opposite the second fluid jet steering lumen proximate second island 944 to define a second fluid pressure accumulating volume. The first fluid jet steering lumen and said second fluid jet steering lumen are thus in fluid communication with one another and with power nozzle 950, and the fluid jet steering section 940 is in fluid communication with and emits a fluid jet into the oscillation inducing interaction region 960 which functions as an oscillation chamber.

Seen in the plan view of Fig. 8, Islands 942, 944 and the first and second jet steering lumens they define will generate circulating flow within each jet steering lumens and the resultant time-varying, colliding flows caused within fluid jet-steering cavity section 940 help steer the resultant fluid jet forced into Interaction Region 960 by inducing an oscillating instability to the fluid which generates first and second vortices within Interaction Region 960 (e.g., resembling vortices 310, 320, as seen in Fig. 4).

The interaction region 960 receives the oscillating jet and the interaction region's interior begins with a narrowed channel inlet called a Setback inlet 961, having a selected setback inlet width ("$S_W$"). The flowpath or axial location of Setback Inlet 961 downstream from the power nozzle 950 is called the setback location ("$S_L$") and setback angle length ("$S_A$") may be characterized as the flowpath length (or the axial length along axis 902) for the Interaction region's angled or diverging first and second sidewall segments beginning with setback inlet 961. The setback width or lateral width of setback inlet 961 can be used to optimize the performance of fluidic 900 with a variety of fluids. For example, given a $P_W$ of 0.5mm and with no connecting slot (e.g. such as transverse slot 146 described for fluidic 100, above), inlet width $S_W$ should be greater than 1.35mm for a bistable operation. For values of $S_W$ less than 1.35mm, the fluidic 400 will not reliably cause or maintain oscillation, (i.e., fluid flow is monostable). However, with a transverse connecting slot (e.g., like 146, but not shown), a narrower inlet ($S_W$ < 1.35mm) is permissible for bistable operation. Thus, for bistable (i.e., oscillating vortex) operation, a wider inlet width (Sw>2.7Pw) works for a prototype circuit with no slot and a slightly narrower inlet (Sw>2Pw) works for circuit with a slot (e.g., 146). The setback angle length controls the uniformity of the spray, where longer lengths produce a heavy ended spray (similar to that shown in Fig. 1E) while shorter lengths produce a uniform spray. It should be noted that setback length $S_A$ cannot be increased indefinitely and the fluidic's performance tends toward monostable operation for larger values of $S_A$. Applicant's experiments have shown that, generally for $S_A > 4Pw$, the fluidic's performance (for circuit 900) becomes undesirably monostable. Preferably, the power nozzle to setback inlet length $S_L$ is slightly more than (e.g., 1.2 times) Pw and is not a critical dimension when compared to Sw and $S_A$.

For the interaction region 960, interaction region width ("$I_w$") and interaction region length ("$I_L$") dimensions configured and sized in relation to the width of power nozzle 450, where $I_w$ is 6.5 times $P_W$ and $I_L$ is typically 11 times $P_W$. These values may be adjusted for packaging constraints. However, dynamic & cold performance are reduced as the size of interaction region 960 is reduced below this nominal set of proportions. The interaction region 960 also includes a symmetrical pair of opposing inwardly projecting substantially triangular sectioned ears 962, 964, which each project from a wider proximal base and terminate distally in a radiussed tip. Ears 962, 964 are preferably equal in size and are aligned along a transverse axis at a position which is downstream from the setback inlet 961 of interaction region 960. Absence of ears 962, 964 makes the circuit 900 monostable.

Critical dimensions for the opening between the tips of ears 962, 964 ("$E_W$") are:

(a) the lateral width of the inter-ear gap between the inwardly projecting distal ends of the opposing ears, and
(b) the axial length of the fluid's path or channel from the power nozzle 450 to the transverse axis of the inwardly projecting ears ("$E_L$").

Applicant's experiments have led to the conclusion that proper oscillating operation is obtained when $E_W$ is approx. 5.2 times Pw and $E_L$ is in the range of $8.5(P_W)$ to $9.2(P_W)$.

In the illustrated embodiment for circuit 400, proper operation was confirmed when the following relationships were maintained: Isw=1.2Pw - 1.3Pw and

$$Sw=3.5Pw-3.8Pw.$$

For the embodiment of Fig 8, the movement of the jet can be compared to that illustrated in Figs 6A and 6B, Since Isw is slightly larger than Pw, the jet (e.g., 500) sets up entrainment along the channels (as illustrated in time sequenced views Figs 6A and 6B). Entrainment alternates from each side and jet (e.g., like 500) moves from one wall to another resulting in an oscillating output. Note that the relative size and shape of the cavity-like jet steering lumens in section 940 have been reduced from the triangular cavities in the comparable jet steering section 240 for fluidic 200, as illustrated in Fig 3, but are comparable to those shown in Figs 5-6B.

Split throat owl fluidic circuit 900 can be used with a splitter at the throat for sprays with larger fan angles. Generally, for sprays with larger fan angles (e.g., >60°) the fluidic configuration of Fig 8 may be preferred for higher circuit efficiency. Circuit efficiency is proportional to fan angle for a given throat to power nozzle area ratio. Thus circuit efficiency equates to higher velocity at a specified fan angle and pressure. Especially for windshield washer applications, in addition to larger drops, higher velocity is desirable.

Persons of skill in the art will appreciate that the present invention provides a fluidic circuit (e.g., 100, 200, 400, 800 or 900) adapted for use in a nozzle assembly and configured to spray an oscillating pattern of fluid droplets, comprising a source of fluid under pressure (not shown), a fluidic oscillator (e.g., 100, 200, 400, 800 or 900) having an inlet in fluid communication with the source and including a power nozzle, said oscillator further including an oscillation chamber having an upstream end with an inlet coupled to said power nozzle for issuing a jet of fluid into the oscillation chamber and a downstream end having an outlet aperture for issuing a jet of fluid into ambient space. The oscillation chamber has a fluid jet steering section (e.g. 140, 240, 440 or 940) in fluid communication with the power nozzle and having a first fluid pressure accumulating volume opposite a second fluid pressure accumulating volume, each in fluid communication with one another and with the power nozzle, where the fluid jet steering section is in fluid communication with and emits a fluid jet into an oscillation inducing interaction region. The oscillator further includes opposing first and second side walls which intersect opposing the top and bottom walls to define the oscillation inducing interaction region in the oscillation chamber for causing the jet of fluid to rhythmically sweep back and forth between the sidewalls in the oscillation chamber, and the oscillation inducing interaction region defines the throat width and the power nozzle width, while the upstream end comprises a bell-shaped feed that promotes the spreading of the jet as it leaves the power nozzle; wherein the interaction region and the fluid jet steering section are quickly filled with fluid from said source and the fluidic oscillator is activated to provide a bistable, oscillating spray.

The fluidic nozzle oscillation chamber's interaction region includes opposing ear-shaped protuberances (e.g., 162, 164) projecting inwardly from the opposing first and second side walls, and the oscillation chamber's fluid jet steering section may comprise a first cavity (e.g., 142 or 242) defining a first fluid pressure accumulating volume opposite a second cavity (e.g., 144 or 244) defining a second fluid pressure accumulating volume, where the first cavity and the second cavity are in fluid communication with one another and with the power nozzle. The fluid jet steering section may have first and second opposing jet steering lumens or channels defined around first and second islands (442, 444) to provide fluid pressure accumulating volumes (instead of opposing cavities). The fluid jet steering section is in fluid communication with and emits a fluid jet into an oscillation inducing interaction region. The first cavity defining the first fluid pressure accumulating volume may be configured with a substantially circular cross section (e.g., 142) or with a substantially triangular cross section (e.g., 242).

Having described preferred embodiments of a new and improved structure and method, it is believed that other modifications, variations and changes will be suggested to those skilled in the art in view of the teachings set forth herein. It is therefore to be understood that all such variations, modifications and changes are believed to fall within the scope of the present invention.

**Claims**

1. A fluidic nozzle configured to spray an oscillating pattern of fluid droplets, comprising:

a source of fluid under pressure,
a first fluidic oscillator (100, 200, 400, 800, 900) defined in a substrate and having an inlet (110, 210, 410, 910) in fluid communication with said source and including a power nozzle (150, 250, 450, 950) with a power nozzle width $P_W$,
said oscillator (100, 200, 400, , 800, 900) further including an oscillation chamber having an upstream end with the inlet coupled to said power nozzle (150, 250, 450, 950) for issuing a jet of fluid into said oscillation chamber and a downstream end having an outlet aperture for issuing a jet of fluid into ambient space;
said oscillation chamber having a fluid jet steering section in fluid communication with said power nozzle (150, 250, 450, 950) and the fluid jet steering section having a first fluid pressure accumulating volume opposite a second fluid pressure accumulating volume, each in fluid communication with one another and with said power nozzle (150, 250, 450, 950), wherein said fluid jet steering section is in fluid communication with and emits a fluid jet into an oscillation inducing interaction region (160, 260, 460, 960);
said oscillator (100, 200, 400, 800, 900) further including and opposing first and second side walls which intersect opposing top and bottom walls to define said oscillation inducing interaction region in said oscillation chamber for causing said jet of fluid to rhythmically sweep back and forth between said sidewalls in said oscillation chamber;
wherein said oscillation inducing interaction region (160, 260, 460, 960) terminates in a throat (180, 280, 480, 980) with a throat width $T_W$;
wherein said oscillation chamber's upstream end leads to a bell-shaped feed (130, 230, 430, 830, 930) that promotes the spreading of the jet as it leaves the power nozzle (150, 250, 450, 950);

wherein the interaction region (160, 260, 460, 960) and said fluid jet steering section are quickly filled with fluid from said source and the fluidic oscillator (100, 200, 400, 800, 900) is activated to generate a bistable oscillating spray;
wherein said oscillation chamber's interaction region (160, 260, 460, 960) includes opposing ear-shaped protuberances (162, 164, 262, 264, 462, 464, 962, 964) projecting inwardly from said opposing first and second side walls.

2. The fluidic nozzle of claim 1, wherein said fluid jet steering section is in fluid communication with and emits a fluid jet into an oscillation inducing interaction region (160, 260, 460, 960).

3. The fluidic nozzle of claim 1, wherein said oscillation chamber's interaction region (160, 260, 460, 960) terminates distally said outlet aperture which is configured as a split throat for issuing a jet of fluid into ambient space; and
wherein said split throat outlet aperture includes an island member projecting inwardly to occlude part of said outlet aperture to provide sprays with fan angles of greater than 60 degrees.

4. The fluidic nozzle of claim 3, wherein said fluidic nozzle provides a spray with fan angle of at least 60 degrees at a high circuit efficiency, where circuit efficiency is proportional to fan angle for a given throat to power nozzle area ratio, and where high circuit efficiency provides higher fluid droplet velocity at a specified fan angle and fluid pressure.

5. The fluidic nozzle of claim 1, wherein said oscillation chamber's interaction region includes structural elements configured with the following selected dimensions,

$P_W$ = Width of Power Nozzle (150, 250, 450, 950),
$P_D$ = Depth of Power Nozzle (150, 250, 450, 950),
$T_W$ = Width of Throat (180, 280, 480, 980),
$T_D$ = Depth of Throat (180, 280, 480, 980),
$I_W$ = Width of Interaction Region (160, 260, 460, 960),
$I_L$ = Length of Interaction Region (160, 260, 460, 960),
$E_W$ = InterEar Gap Width between Ears (162, 164, 262, 264, 462, 464, 962, 964),
$E_L$ = Axial Location of inwardly projecting tips of Ears (162, 164, 262, 264, 462, 464, 962, 964),
$S_W$ = Channel Width at Setback Inlet (161, 261, 461, 961),
$S_L$ = Axial Length of Setback Inlet (161, 261, 461, 961), and
$S_A$ = Setback Angle Length, or axial length of Interaction region's diverging sidewall segments beginning with Setback Inlet (161, 261, 461, 961); and

wherein said Setback Angle Length $S_A$ is configured to be less than or equal to 4*Pw, to maintain the fluidic's bistable oscillating performance.

**6.** The fluidic nozzle of claim 5, wherein said oscillation chamber's power nozzle (150, 250, 450, 950) to setback inlet length $S_L$ is greater than Pw, wherein said InterEar Gap Width between Ears, $E_W$, greater than Pw, and wherein $E_L$ is in the range of 8.5 x $(P_W)$ to 9.2 x $(P_W)$.

**7.** The fluidic nozzle of claim 1, further comprising a second first fluidic oscillator (100, 200, 400, 800, 900) defined in said substrate, wherein said substrate is substantially planar and has a first side opposing a second side and wherein said first fluidic oscillator (100, 200, 400, 800, 900) is defined in said substrate's first side and said second fluidic oscillator is defined in said substrate's second side; and wherein said second fluidic oscillator comprises an inlet in fluid communication with said first oscillator's inlet; and wherein said second fluidic oscillator comprises an outlet aperture for issuing a second oscillating jet of fluid into ambient space.

**Patentansprüche**

**1.** Fluiddüse, die dazu ausgelegt ist, ein Oszillationsmuster von Fluidtröpfchen zu sprühen, und Folgendes umfasst:

eine Quelle von Fluid unter Druck, einen ersten Fluidoszillator (100, 200, 400, 800, 900), der in einem Substrat definiert ist und einen Einlass (110, 210, 410, 910) aufweist, der mit der Quelle in Fluidkommunikation steht und eine Leistungsdüse (150, 250, 450, 950) mit einer Leistungsdüsenbreite $P_W$ beinhaltet, wobei der Oszillator (100, 200, 400, 800, 900) ferner eine Oszillationskammer beinhaltet, die ein stromaufwärtiges Ende, an dem der Einlass zum Ausgeben eines Strahls von Fluid in die Oszillationskammer an die Leistungsdüse (150, 250, 450, 950) gekoppelt ist, und ein stromabwärtiges Ende mit einer Auslassöffnung zum Ausgeben eines Strahls von Fluid in einen Umgebungsraum aufweist; wobei die Oszillationskammer einen Fluidstrahllenkbereich aufweist, der mit der Leistungsdüse (150, 250, 450, 950) in Fluidkommunikation steht, und der Fluidstrahllenkbereich ein erstes Fluiddruckakkumulationsvolumen gegenüber einem zweiten Fluiddruckakkumulationsvolumen aufweist, die jeweils miteinander und mit der Leistungsdüse (150, 250, 450, 950) in Fluidkommunikation stehen, wobei der Fluidstrahllenkbereich mit einer Oszillationsbewirkungsinteraktionsregion (160, 260, 460, 960) in Fluidkommunikation steht und einen Fluidstrahl in dieselbe emittiert; wobei der Oszillator (100, 200, 400, 800, 900) ferner erste und zweite gegenüberliegende Seitenwände beinhaltet, die gegenüberliegende obere und untere Wände schneiden, um zum Veranlassen des Strahls von Fluid, zwischen den Seitenwänden in der Oszillationskammer rhythmisch vor und zurück zu streichen, die Oszillationsbewirkungsinteraktionsregion in der Oszillationskammer zu definieren; wobei die Oszillationsbewirkungsinteraktionsregion (160, 260, 460, 960) eine Kehle (180, 280, 480, 980) mit einer Kehlbreite $T_W$ abschließt; wobei das stromaufwärtige Ende der Oszillationskammer zu einer glockenförmigen Zuführung (130, 230, 430, 830, 930) führt, die das Ausbreiten des Strahls, wenn er die Leistungsdüse (150, 250, 450, 950) verlässt, fördert; wobei die Interaktionsregion (160, 260, 460, 960) und der Fluidstrahllenkbereich schnell mit Fluid aus der Quelle gefüllt werden und der Fluidoszillator (100, 200, 400, 800, 900) aktiviert wird, um einen bistabilen Oszillationssprühnebel zu erzeugen; wobei die Interaktionsregion (160, 260, 460, 960) der Oszillationskammer gegenüberliegende ohrförmige Protuberanzen (162, 164, 262, 264, 462, 464, 962, 964), die von den gegenüberliegenden ersten und zweiten Seitenwänden nach innen vorstehen, beinhaltet.

**2.** Fluiddüse nach Anspruch 1, wobei der Fluidstrahllenkbereich mit einer Oszillationsbewirkungsinteraktionsregion (160, 260, 460, 960) in Fluidkommunikation steht und einen Fluidstrahl in dieselbe emittiert.

**3.** Fluiddüse nach Anspruch 1, wobei die Interaktionsregion (160, 260, 460, 960) der Oszillationskammer die Auslassöffnung, die zum Ausgeben eines Strahls von Fluid in einen Umgebungsraum als eine geteilte Kehle ausgelegt ist, distal abschließt; und wobei die Auslassöffnung der geteilten Kehle ein Inselelement beinhaltet, das nach innen vorsteht, um einen Teil der Auslassöffnung zu verdecken, um Sprühnebel mit Fächerwinkeln von mehr als 60 Grad bereitzustellen.

**4.** Fluiddüse nach Anspruch 3, wobei die Fluiddüse einen Sprühnebel mit einem Fächerwinkel von mindestens 60 Grad mit einer hohen Schaltungseffizienz bereitstellt, wo sich die Schaltungseffizienz für ein gegebenes Kehle-Leistungsdüsenflächen-Verhältnis proportional zum Fächerwinkel verhält, und wo die hohe Schaltungseffizienz bei einem spezifizierten Fächerwinkel und Fluiddruck eine höhere Fluidtröpfchengeschwindigkeit bereitstellt.

5. Fluiddüse nach Anspruch 1, wobei die Interaktionsregion der Oszillationskammer Strukturkomponenten beinhaltet, die mit den folgenden ausgewählten Abmessungen ausgelegt sind,

> $P_W$ = Breite der Leistungsdüse (150, 250, 450, 950),
> $P_D$ = Tiefe der Leistungsdüse (150, 250, 450, 950),
> $T_W$ = Breite der Kehle (180, 280, 480, 980),
> $T_D$ = Tiefe der Kehle (180, 280, 480, 980),
> $I_W$ = Breite der Interaktionsregion (160, 260, 460, 960),
> $I_L$ = Länge der Interaktionsregion (160, 260, 460, 960),
> $E_W$ = Zwischenohrspaltbreite zwischen Ohren (162, 164, 262, 264, 462, 464, 962, 964),
> $E_L$ = Axiallage der nach innen vorstehenden Spitzen von Ohren (162, 164, 262, 264, 462, 464, 962, 964),
> $S_W$ = Kanalbreite am zurückversetzten Einlass (161, 261, 461, 961),
> $S_L$ = Axiale Länge des zurückversetzten Einlasses (161, 261, 461, 961), und
> $S_A$ = Rückversatzwinkellänge oder axiale Länge von divergierenden Seitenwandsegmenten der Interaktionsregion, beginnend am zurückversetzten Einlass (161, 261, 461, 961); und

wobei die Rückversatzwinkellänge $S_A$ dazu ausgelegt ist, kleiner als oder gleich $4*P_W$ zu sein, um das bistabile Oszillationsvermögen des Fluids aufrechtzuerhalten.

6. Fluiddüse nach Anspruch 5, wobei die Länge der Leistungsdüse (150, 250, 450, 950) der Oszillationskammer zum zurückversetzten Einlass $S_L$ größer als $P_W$ ist, wobei die Zwischenohrspaltbreite zwischen Ohren, $E_W$, größer als $P_W$ und wobei $E_L$ in der Spanne von $8,5 \times (P_W)$ bis $9,2 \times (P_W)$ liegt.

7. Fluiddüse nach Anspruch 1, die ferner einen zweiten Fluidoszillator (100, 200, 400, 800, 900), der im Substrat definiert ist, umfasst, wobei das Substrat im Wesentlichen planar ist und eine erste Seite aufweist, die einer zweiten Seite gegenüberliegt, und wobei der erste Fluidoszillator (100, 200, 400, 800, 900) in der ersten Seite des Substrats definiert ist und der zweite Fluidoszillator in der zweiten Seite des Substrats definiert ist; und

wobei der zweite Fluidoszillator einen Einlass umfasst, der mit dem Einlass des ersten Oszillators in Fluidkommunikation steht; und

wobei der zweite Fluidoszillator eine Auslassöffnung zum Ausgeben eines zweiten oszillierenden Strahls von Fluid in einen Umgebungsraum umfasst.

## Revendications

1. Buse fluidique configurée pour pulvériser un motif oscillant de gouttelettes de fluide, comprenant :

> une source de fluide sous pression,
> un premier oscillateur fluidique (100, 200, 400, 800, 900) défini dans un substrat et ayant une admission (110, 210, 410, 910) en communication fluidique avec ladite source et comportant un injecteur principal (150, 250, 450, 950) avec une largeur $P_W$ d'injecteur principal,
> ledit oscillateur (100, 200, 400, 800, 900) comporte en outre une chambre d'oscillation ayant une extrémité amont, avec l'admission couplée audit injecteur principal (150, 250, 450, 950) pour émettre un jet de fluide dans ladite chambre d'oscillation, et une extrémité aval ayant une ouverture de refoulement pour émettre un jet de fluide dans l'espace ambiant ;
> ladite chambre d'oscillation a une section de direction de jet de fluide en communication fluidique avec ledit injecteur principal (150, 250, 450, 950), et la section de direction de jet de fluide a un premier volume d'accumulation de pression de fluide opposé à un second volume d'accumulation de pression de fluide, chacun en communication fluidique avec l'autre et avec ledit injecteur principal (150, 250, 450, 950), dans laquelle ladite section de direction de jet de fluide est en communication fluidique avec une région d'interaction (160, 260, 460, 960) induisant une oscillation et émet un jet de fluide dans celle-ci ;
> ledit oscillateur (100, 200, 400, 800, 900) comporte en outre des première et seconde parois latérales opposées, qui se croisent avec des parois supérieure et inférieure opposées pour définir ladite région d'interaction induisant une oscillation dans ladite chambre d'oscillation, afin d'amener ledit jet de fluide à effectuer un balayage rythmique en va-et-vient entre lesdites parois latérales dans ladite chambre d'oscillation ;
> dans laquelle ladite région d'interaction (160, 260, 460, 960) induisant une oscillation se termine par un col (180, 280, 480, 980) avec une largeur $T_W$ de col ;
> dans laquelle l'extrémité amont de ladite chambre d'oscillation conduit à une alimentation en forme de cloche (130, 230, 430, 830, 930) qui favorise la propagation du jet lorsque celui-ci quitte l'injecteur principal (150, 250, 450, 950) ; dans laquelle la région d'interaction (160, 260, 460, 960) et ladite section de direction de jet de fluide sont rapidement remplies de fluide provenant de ladite source, et l'oscillateur fluidique (100, 200, 400, 800, 900) est activé pour générer une pulvérisation oscillante bistable ;

dans laquelle la région d'interaction (160, 260, 460, 960) de ladite chambre d'oscillation comporte des saillies opposées en forme d'oreille (162, 164, 262, 264, 462, 464, 962, 964) faisant saillie vers l'intérieur à partir desdites première et seconde parois latérales.

2. Buse fluidique selon la revendication 1, dans laquelle ladite section de direction de jet de fluide est en communication fluidique avec et émet un jet de fluide dans une région d'interaction (160, 260, 460, 960) induisant une oscillation.

3. Buse fluidique selon la revendication 1, dans laquelle la région d'interaction (160, 260, 460, 960) de ladite chambre d'oscillation termine de façon distale ladite ouverture de refoulement, qui est configurée comme un col fendu, pour émettre un jet de fluide dans l'espace ambiant ; et

dans laquelle ladite ouverture de refoulement en col fendu comporte un organe en forme d'îlot faisant saillie vers l'intérieur pour occlure une partie de ladite ouverture de refoulement, afin de fournir des pulvérisations avec des angles de dispersion supérieurs à 60 degrés.

4. Buse fluidique selon la revendication 3, dans laquelle ladite buse fluidique fournit une pulvérisation avec un angle de dispersion d'au moins 60 degrés à efficacité de circuit élevée, où l'efficacité de circuit est proportionnelle, à l'angle de dispersion, à un rapport donné d'une superficie de col sur une superficie d'injecteur principal, et où l'efficacité de circuit élevée fournit une vitesse de gouttelette de fluide plus élevée à un angle de dispersion et une pression de fluide spécifiés.

5. Buse fluidique selon la revendication 1, dans laquelle la région d'interaction de ladite chambre d'oscillation comporte des éléments structurels configurés avec les dimensions sélectionnées suivantes,

$P_W$ = largeur d'injecteur principal (150, 250, 450, 950),
$P_D$ = profondeur d'injecteur principal (150, 250, 450, 950),
$T_W$ = largeur de col (180, 280, 480, 980),
$T_D$ = profondeur de col (180, 280, 480, 980),
$I_W$ = largeur de région d'interaction (160, 260, 460, 960),
$I_L$ = longueur de région d'interaction (160, 260, 460, 960),
$E_W$ = largeur d'écart InterEar entre les oreilles (162, 164, 262, 264, 462, 464, 962, 964),
$E_L$ = emplacement axial de pointes faisant saillie vers l'intérieur des oreilles (162, 164, 262, 264, 462, 464, 962, 964),
$S_W$ = largeur de canal à l'admission de recul (161, 261, 461, 961),
$S_L$ = longueur axiale de l'admission de recul (161, 261, 461, 961), et
$S_A$ = longueur d'angle de recul, ou longueur axiale de segments de parois latérales qui divergent, de la région d'interaction et commençant à l'admission (161, 261, 461, 961) ; et

dans laquelle ladite longueur d'angle de recul $S_A$ est configurée pour être inférieure ou égale à $4*P_W$, pour maintenir la performance d'oscillation bistable des fluides.

6. Buse fluidique selon la revendication 5, dans laquelle l'injecteur principal (150, 250, 450, 950) de ladite chambre d'oscillation à la longueur de l'admission de recul $S_L$ est supérieur à $P_W$, dans laquelle ladite largeur d'écart InterEar entre les oreilles, $E_W$, est supérieure à $P_W$, et dans laquelle $E_L$ se situe dans la plage allant de $8,5 \times (P_W)$ à $9,2 \times (P_W)$.

7. Buse fluidique selon la revendication 1, comprenant en outre un second oscillateur fluidique (100, 200, 400, 800, 900) défini dans ledit substrat, dans laquelle ledit substrat est sensiblement plat et a un premier côté opposé à un second côté, et dans laquelle ledit premier oscillateur fluidique (100, 200, 400, 800, 900) est défini dans le premier côté dudit substrat et ledit second oscillateur fluidique est défini dans le second côté dudit substrat ; et

dans laquelle ledit second oscillateur fluidique comprend une admission en communication fluidique avec l'admission dudit premier oscillateur ; et

dans laquelle ledit second oscillateur fluidique comprend une ouverture de refoulement pour émettre un second jet de fluide oscillant dans l'espace ambiant.

FIG. 1A

FIG. 1B

FAN ANGLE

FIG. 1C

**FIG. 1D**
**PRIOR ART**

DISTANCE ACROSS THE AREA BEING WETTED BY THE JET

**FIG. 1E**
**PRIOR ART**

VOLUME OF LIQUID COLLECTED
IN UNIT WIDTH CELLS LOCATED
ACROSS THE WIDTH OF THE AREA OVER
WHICH THE JET IS SWEPT

EP 2 931 435 B1

**FIG. 1F**
PRIOR ART

FIG. 2B

FIG. 2A

**FIG. 3**

FIG. 4

**FIG. 5**

**FIG. 6A**

**FIG. 6B**

EP 2 931 435 B1

Double circuit comprising Owl and Mushroom circuits

**FIG. 7C**

600
810
820
830
880
800
Owl circuit

**FIG. 7B**

600
800
710
700
Section A-A

**FIG. 7A**

600
700
710
602
Mushroom circuit
A

Owl oscillator with splitter

# FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61736306
- US 314242
- US 12467270 B
- US 4463904 A
- US 7014131 B
- US 7267290 B
- US 7651036 B
- US 2010276521 A1
- FR 2915251 A1